# EUROPEAN PATENT SPECIFICATION

(11) **EP 3 885 087 B1**
(45) Date of publication and mention of the grant of the patent: **18.01.2023**
(21) Application number: 21164943.9
(22) Date of filing: 25.03.2021
(51) Int. Cl.: B27L 7/00

(54) **FEEDING ARRANGEMENT FOR A FIREWOOD PROCESSOR**
ZUFÜHREINRICHTUNG FÜR EINE FEUERHOLZZERKLEINERUNGSANLAGE
DISPOSITIF D'ALIMENTATION D'UN APPAREIL DE FENDAGE DE BOIS DE CHAUFFAGE

(30) Priority: 27.03.2020 FI 20205310
(43) Date of publication of application: 29.09.2021
(73) Proprietor: Agromaster Oy, 54710 Lemi (FI)
(72) Inventor: Pitkäniemi, Tarmo, 54710 Lemi (FI)
(74) Representative: Papula Oy

(56) References cited:
- DE-U1- 29 918 673
- US-A- 4 076 061
- US-A1- 2013 098 503

## Description

### FIELD OF THE INVENTION

The invention relates to a feeding arrangement for a firewood processor as defined in claim 1.

### BACKGROUND OF THE INVENTION

Various firewood processors are known in the prior art. It is known in the field of firewood processors that log cutting is performed by slitting, shearing or sawing, and the log sections are split by means of a splitting blade into two or more parts.

In the known firewood processors the log is lifted to the firewood processor and fed through the firewood processor in which the log cutting and log section splitting are carried out.

From US 4076061, US 2013/098503 and DE 29918673 are known different cutting and splitting machines. US4076061A discloses the preamble, claim 1.

### OBJECT OF THE INVENTION

It is an object of the invention to provide a new type of solution for feeding a log into a firewood processor. Specifically, it is an object of the invention to disclose an arrangement in which the log feeding to the firewood processor is an easy and quick operation and the use of muscle power may be reduced.

### SUMMARY OF THE INVENTION

A feeding arrangement for a firewood processor according to the invention is characterized by the features set out in the claims.

The feeding arrangement for a firewood processor comprises a feeding surface arranged in connection with the firewood processor for feeding a log into the firewood processor in which the log is cut and split.

### DETAILED DESCRIPTION OF THE INVENTION

A feeding arrangement for a firewood processor comprises a feeding surface arranged in connection with the firewood processor for feeding a log into the firewood processor in which the log is cut and split. The feeding surface is connected to the firewood processor, and the feeding surface is arrangeable at least partly inclined, such that a first end of the feeding surface is lower than a second end in a log feeding stage. The feeding arrangement comprises a feeding member, at least one part of which is height adjustable, for transferring the log to the feeding surface, such as for lifting a log end and transferring it to the feeding surface, preferably via the first end of the feeding surface. The feeding member is connected to the feeding surface and/or to the firewood processor.

The firewood processor comprises at least a body and cutting and splitting parts including cutting and splitting blades. In one embodiment the cutting blade for cutting the log is arranged in the firewood processor immediately following the feeding surface, or alternatively following the point of connection between the feeding surface and the firewood processor. In one embodiment the cutting blade is fastened to the firewood processor. In one embodiment the cutting blade is connected to or in connection with the feeding surface, whereby the cutting blade moves with the feeding surface. In this connection the cutting blade may be any cutting blade known per se and suitable for the purpose of use, such as a sawing cutting blade, e.g. a blade flange provided with a saw chain, or a shearing blade, e.g. a guillotine-type blade, or the like. The splitting blade may be any splitting blade known per se and suitable for the purpose of use. The cutting blade and the splitting blade may have been mounted in a desired manner and/or in a manner suitable for the purpose of use in the firewood processor to form a cutting-splitting unit. Advantageously, the feeding arrangement according to the invention may be arranged in connection with any kind of firewood processor.

In one embodiment the feeding surface is connected to the firewood processor in a hinged manner. In one embodiment the feeding surface is fixedly connected to the firewood processor. In one embodiment the feeding surface is connected fixedly, yet in a hinged manner, to the firewood processor, e.g. to the body of the firewood processor. In one embodiment the feeding surface is connected to the firewood processor by a hinge section. In one embodiment the feeding surface is connected to the firewood processor by the second end thereof. In one embodiment the feeding surface is fastened to the firewood processor or to the body of the firewood processor, and it preferably moves together with the firewood processor or with the body thereof.

In this connection the feeding surface refers to any feeding surface, feeding trough, feeding channel, feeding belt, feeding top or the like, by means of which the log being fed may be fed into the firewood processor and specifically to the cutting blade thereof. In one embodiment the first end of the feeding surface may be shaped in a desired manner to facilitate log feeding.

In one embodiment the feeding surface is provided with a belt or a chain of a desired length between the first and the second end for moving the log towards the second end of the feeding surface. In this connection the belt refers to any belt, mat or a corresponding solution by means of which the log movement on the feeding surface and further feeding to the firewood processor may be facilitated. In this connection the chain refers to any chain, chain-type movable means or a corresponding solution by means of which the log movement on the feeding surface and further feeding to the firewood processor may be facilitated. The chain may comprise transverse retaining elements, e.g. bulges, flanges or the like, for facilitating the log movement. In one embodiment the belt or the chain is preferably a belt or a chain rotated via at least two rollers, gears or the like. The belt may be selected from any belt solution suitable for the purpose of use, e.g. a rubber mat, track or another suitable belt solution. The chain may be selected from any chain solution suitable for the purpose of use. The belt or the chain may be arranged at a suitable point of the feeding surface according to the purpose of use. The length of the belt or the chain on the feeding surface may vary. Preferably, the belt or the chain is arranged to extend to a suitable length on the feeding surface, e.g. to a length of 0.5 - 1.5 meters or 1.0 - 1.5 meters. In one embodiment the belt or the chain is mounted at a suitable distance from the feeding member and/or at a suitable distance from the first and/or the second end of the feeding surface. In one embodiment the belt or the chain is mounted in the feeding surface substantially to the full extent from the first end of the feeding surface to the second end. In one embodiment the belt or the chain is mounted in a desired part of the feeding surface.

In one embodiment a stop, e.g. a hydraulic stop, is arranged at the second end of the feeding surface or close to the second end of the feeding surface or immediately behind the second end of the feeding surface, on which stop a log end impinges, for stopping the log in order for the log to be cut.

In one embodiment the feeding surface is formed of one part. In one embodiment the feeding surface is formed of at least two parts connected in a hinged manner to each other. In one embodiment the feeding surface is formed of two parts connected in a hinged manner to each other. In one embodiment the feeding surface is formed of more than two parts connected in a hinged manner to each other. In one embodiment the feeding surface is formed of one part and is a rigid unit.

In one embodiment the feeding surface is arranged in a desired position and at a desired angle in relation to ground or a surface from which the log is fed to the firewood processor. In one embodiment the feeding surface is arranged inclined, such that between the first and the second end of the feeding surface there is a desired angle of inclination in the log feeding stage. In one embodiment the feeding surface is arranged inclined, such that between the first and the second end of the feeding surface there is a same uniform angle of inclination in the log feeding stage. In one embodiment the feeding surface may be arranged in an almost horizontal position or in a horizontal position, at least momentarily in the log feeding stage, especially when the log is fed from a higher surface or from the top of some log rack. In one embodiment the feeding surface is formed of at least two parts, and the feeding surface is a hinged surface in which the inclination of different parts of the surface may be regulated. In one embodiment the feeding surface is formed of at least two parts, wherein at least one part is arranged inclined, such that the first end of the feeding surface is lower than the second end in the log feeding stage. In one embodiment the feeding surface is formed of at least two parts and at least one part is arranged inclined, such that it has a desired angle of inclination in the log feeding stage. In one embodiment the feeding surface is formed of at least two parts and at least one part, e.g. a part in connection with the first or the second end, is arranged horizontal in the log feeding stage. In one embodiment a part of the feeding surface at the first end of the feeding surface may be lifted or lowered. In one embodiment the parts of the feeding surface are arranged parallel in the log feeding stage, whereby the parts of the feeding surface form a continuous feeding surface having the same inclination.

In one embodiment the feeding surface is connected to the firewood processor in a hinged manner, and the point of connection between the firewood processor and the feeding surface is provided with at least one hinge structure for enabling movement of the feeding surface, preferably movement of the first end of the feeding surface in an up-down direction and arrangement of the whole feeding surface in a desired position, and thereby the angle of inclination of the feeding surface may be adjusted. In one embodiment a second part of the feeding surface located towards the firewood processor is provided with at least one hinge structure. In one embodiment the feeding arrangement comprises locking means for locking the position of the feeding surface at a desired angle of inclination to the firewood processor.

In one embodiment at least one hinge structure is arranged between two parts of the feeding surface, i.e. at the point of connection therebetween, for enabling movement of the feeding surface, preferably movement of at least one part or both parts in an up-down direction, when the feeding surface is formed of at least two parts.

In one embodiment the feeding surface is arranged to be moved, such as inclined, by means of movement and/or inclination of the firewood processor or the body of the firewood processor. The feeding surface may have been fastened to the firewood processor or to the body thereof, and the feeding surface is moved by means of movement of the firewood processor, i.e. the feeding surface inclines with the processor. In one embodiment the feeding surface is parallel to the body of the firewood processor. In one embodiment the parts of the feeding surface are arranged parallel in the same line.

In one embodiment the first end of the feeding surface may be lowered to the level of ground or another surface or to a specific height relative to the surface on the basis of the height from which the log is transferred to the feeding surface by means of the feeding member. In one embodiment a support member by means of which the feeding surface may be supported to the surface is arranged in connection with the feeding surface, e.g. in connection with or in the vicinity of the first end thereof. In one embodiment the support member is pivotable aside or upwards, if it is not needed. In one embodiment the feeding member is supported to the ground or to a surface.

In one embodiment the feeding member comprises a shaft part and a feeding part connected to an end of the shaft part for facilitating log transfer to the feeding surface, such as for lifting and transferring a log end to the feeding surface and for moving the log towards and onto the feeding surface. Specifically, the feeding part of the feeding member is movable, such as pivotable, liftable and lowerable to a desired height, to bring or roll the log onto the feeding part and thereby to easily feed the log to the feeding surface.

The feeding part comprises at least one feeding roller onto which the log is transferred and by means of which the log is moved forward in the log feeding stage. In one embodiment the feeding roller of the feeding part may be any roller, cylinder, hydraulic roller, another corresponding roller or cylinder, rotatable part, belt such as a short belt, belt-type solution or the like, by means of which the log may be moved forward. The feeding roller is preferably arranged at the so-called open end of the feeding part, not at the end located towards the shaft part. In one embodiment the feeding roller is arranged between two parts of the feeding part that connect the feeding roller to the feeding part and give support for the feeding roller. The feeding roller may be shaped, e.g. concave, such as narrower in the middle or in the middle part, whereby it guides and centres the log or log end. When the feeding roller is concave, the edges of the feeding roller rise higher, thus helping to centre the log. By means of the feeding roller the log feeding to the feeding surface and further to the firewood processor is facilitated.

In one embodiment a transmission bar is arranged inside the shaft part, which transmission bar is connected by a first end thereof to an actuator and by a second end thereof to the feeding part, preferably by means of an intermediate hinge to the feeding part, and provides the movement of the feeding part by means of the actuator.

In one embodiment the shaft part of the feeding member is arranged to protect the transmission bar. In one embodiment the shaft part is connected to the firewood processor. In one embodiment the shaft part is connected to the firewood processor by means of a connecting part.

In one embodiment the feeding part of the feeding member may be lowered to the level of ground or another surface, e.g. at the beginning of log feeding, or the end of the feeding part located towards the feeding roller may be arranged at a desired height relative to the surface, e.g. in the log feeding stage and as the log feeding progresses. In one embodiment the height of the feeding part may be adjusted relative to the level of the feeding surface. In one embodiment the feeding part and specifically the feeding roller thereof is liftable and/or lowerable. Thereby providing the log to the feeding table for example from a log stack is easy, quick and effortless, and no great muscle power is needed.

In one embodiment the feeding roller of the feeding part comprises a gripping surface that provides friction between the log and the feeding roller, by means of which gripping surface the log may be moved to the feeding surface. The gripping surface may be e.g. a sticky, frictional, spiky or otherwise gripping-facilitating surface by means of which the log can be better kept on the feeding roller, when the log is rolled onto the feeding roller or the log is moved to the feeding surface and on the feeding surface forward.

In one embodiment the feeding member comprises guide members, e.g. retaining members, for guiding the log or log end or keeping it on the feeding part or on the feeding roller and/or for directing the log towards the feeding surface. In one embodiment the guide members are arranged at the end of the feeding part, on both sides of the feeding roller.

In one embodiment the hinge structure arranged in the feeding surface or at the point of connection between the firewood processor and the feeding surface is configured to enable the feeding surface to be pivoted to a vertical position and/or towards the firewood processor, especially when no log feeding is carried out or for the time of transport of the firewood processor. Thereby the feeding surface or at least a part thereof may be pivoted upwards towards the firewood processor or over the firewood processor. In one embodiment the feeding member is pivotable to a vertical position and/or towards the firewood processor, especially when no log feeding is carried out or for the time of transport of the firewood processor. In one embodiment the feeding arrangement comprises locking means for locking the position of the feeding surface and/or the feeding member for such time when the logs are not fed into the firewood processor, e.g. for the time of transport or idle time of the processor.

The hinge structures in the feeding surface or in the feeding member may be formed from any parts known per se, by which parts a hinge effect is provided between two objects and one of the objects is enabled to be turned on a hinge point relative to the other one. The hinge structure may comprise one or more hinges or corresponding members.

The hinge point between the feeding surface and the firewood processor, which hinge point preferably comprises the hinge structure, may have been provided at any suitable point of the point of connection between the feeding surface and the firewood processor. Preferably, the feeding surface and the firewood processor are at the point of connection between them connected to each other in a suitable manner to enable pivoting of the feeding surface. Preferably, the feeding surface and the firewood processor are shaped at the point of connection to be compatible in relation to each other. A hinge structure and a hinge point at another possible hinge section of the feeding surface may have been provided at any suitable point of the hinge section in question. Preferably, the parts of the feeding surface are shaped at the hinge sections to be compatible in relation to each other.

In one embodiment at least one part of the feeding surface having at least two parts, e.g. a part of the feeding surface located towards the second end, is fastened to the firewood processor or to the body thereof, and at least one part is pivotable, e.g. to a vertical position for the time of transport, due to a hinge structure between the parts.

In one embodiment the movement or pivoting of the feeding surface is arranged to be implemented by means of at least one actuator. In one embodiment the feeding surface or the first end thereof is liftable and lowerable by means of at least one actuator. In one embodiment the first end of the feeding surface is liftable and lowerable by means of at least one actuator and hinging of the feeding surface. In one embodiment the parts of the feeding surface are movable by means of at least one actuator. In one embodiment the parts of the feeding surface are moved by means of more than one actuator.

In one embodiment the movement of the feeding member is arranged to be implemented by means of at least one actuator. In one embodiment the feeding part of the feeding member, and specifically the feeding roller thereof, is liftable and lowerable by means of an actuator. In one embodiment the feeding part of the feeding member, and specifically the feeding roller thereof, is liftable and lowerable by means of at least one actuator and the transmission bar and the intermediate hinge connected thereto. In one embodiment the actuator is arranged to push the transmission bar and thereby the intermediate hinge, which causes the feeding part to be lifted. As a result the feeding part may be lifted to a highest position thereof. In one embodiment the feeding member is liftable to a vertical position by means of a hinge point between an actuator and the transmission bar, when the actuator is in an extreme position, i.e. the whole path has been travelled. In one embodiment the feeding part may be lifted and lowered and the feeding member lifted to a vertical position by means of one actuator. In one embodiment the feeding member is moved by means of more than one actuator. In one embodiment the feeding roller is moved, such as rotated, by means of at least one actuator.

The actuator may be any actuator suitable for the purpose of use, such as a cylinder, e.g. a hydraulic cylinder. The actuator may be configured to move two parts separated by a hinge relative to each other and/or rotatable or otherwise movable parts. In one embodiment the actuator comprises one or more cylinders.

In one embodiment the feeding arrangement comprises at least one control device for causing the moving and/or pivoting of the feeding member and/or the feeding surface. In one embodiment the feeding arrangement comprises at least one control device for moving the feeding surface or the first end thereof in an up-down direction. In one embodiment the feeding arrangement comprises at least one control device for moving the feeding member. The control device may be any device for controlling, by which the movement of the feeding member and/or the feeding surface to a desired position may be operated, preferably with assistance of an actuator. The control device may comprise a control means, for example a turning handle, operating handle, control stick, control panel or another suitable means, for providing control. In one embodiment the feeding surface may be arranged by means of the control device to a desired position, such as angle of inclination, for log feeding. In one embodiment the feeding member, and specifically the feeding part of the feeding member, may be arranged by means of the control device to a desired position for log feeding. In one embodiment the feeding surface and/or the feeding member are pivotable by means of the control device to a desired position when the logs are not fed. The control means of the control device may be positioned in a suitable place in the firewood processor or in connection with the feeding surface.

In one embodiment the inclination of the feeding surface or a part thereof may be adjusted before the log feeding stage or during the feeding stage. In one embodiment the angle of inclination of the feeding surface may be adjusted by means of a control device. In one embodiment the angles of inclination of the parts of the feeding surface may be independently adjusted relative to each other.

In one embodiment the position of the feeding member or the parts thereof may be adjusted before the log feeding stage or during the feeding stage. In one embodiment the position of the feeding member or the parts thereof may be adjusted by means of a control device. In one embodiment the positions of the parts of the feeding member may be independently adjusted relative to the feeding surface. In one embodiment the feeding roller of the feeding part may be controlled independently relative to the feeding surface. In one embodiment the feeding roller of the feeding part is controlled synchronously to the belt or the chain of the feeding surface.

In one embodiment the firewood processor comprises at least one power unit for providing log cutting and splitting of the cut log section. The power unit may be any power unit suitable for the purpose of use. In one embodiment the power unit is a tractor, an internal combustion engine or an electric motor. In one embodiment a power unit of another device may be utilized as the power unit.

In one embodiment the firewood processor, such as the body thereof, comprises at least two wheels or fastening members for connecting the firewood processor to a trailer, a wheel frame or a vehicle, e.g. to a tractor or a front end loader. Thereby the firewood processor may be easily moved.

In one embodiment the cutting and splitting functions of the firewood processor are arranged above the mobile axis. In one embodiment the feeding surface is lowerable onto the shaft of the mobile version, e.g. for the time of transfer.

In one embodiment an attachment is connectable to the first end of the feeding surface to increase the length of the feeding surface. The attachment may be connected and/or fastened by connecting or fastening means known per se to the first end of the feeding surface.

### ADVANTAGES PROVIDED BY THE INVENTION

The feeding arrangement according to the invention provides significant advantages over the prior art. Log feeding, specifically the feeding of heavy and long logs, to the firewood processor may be facilitated by means of the invention. Due to the invention a safe feeding arrangement is provided, not imposing a restriction on the length of the log being fed. In addition, the structure according to the invention allows supporting of the feeding member to the ground or to a surface, and thus the log lifting stage does not burden the firewood processor and the structure thereof.

A small, simple and easy-to-use firewood processor may be provided due to the invention. In addition, a robust structure is provided for the firewood processor.

### LIST OF THE FIGURES

Fig. 1 - 3 show one feeding arrangement for a firewood processor according to the invention as a simplified illustration in different log feeding stages, and
Fig. 4 shows one feeding arrangement for a firewood processor according to the invention as a simplified illustration in a collapsed position.

### EXAMPLES OF EMBODIMENTS

The invention will now be described by means of detailed examples of its embodiments with reference to the accompanying figures.

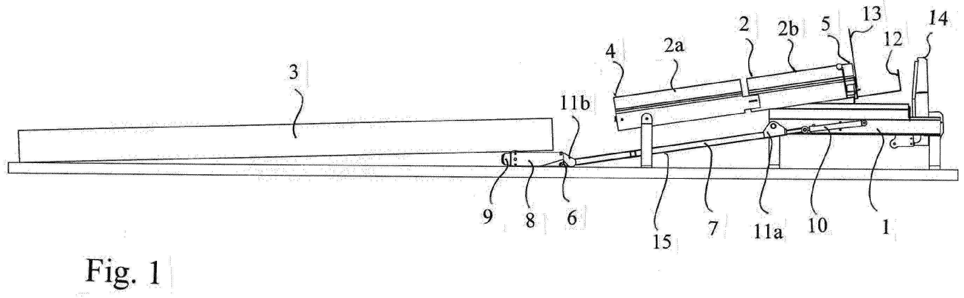

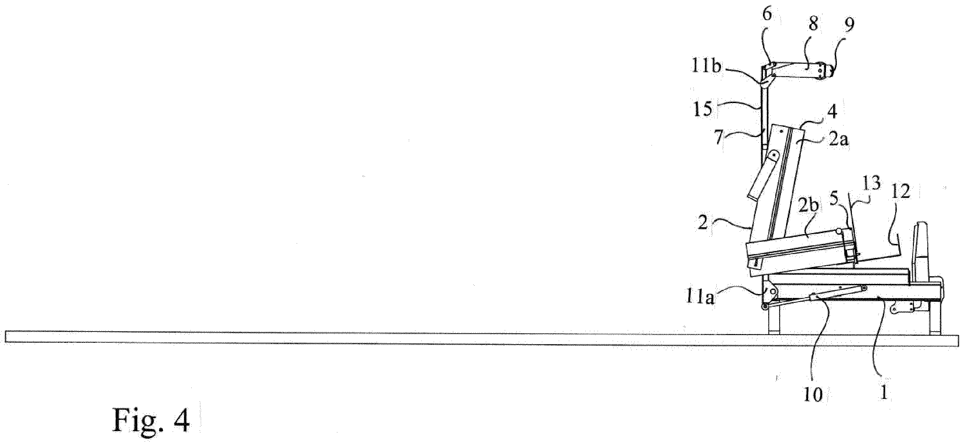

A feeding arrangement for a firewood processor is shown in Fig. 1 - 4. In Fig. 1 - 3 the feeding arrangement is shown is an operating position, i.e. in a log feeding position, and in Fig. 4 the feeding arrangement is shown in a collapsed position, i.e. in the firewood processor's transport position. The firewood processor is shown in the figures in a simplified form only illustrating essential parts for the invention, and the firewood processor is not described in more detail in this connection, because cutting and splitting are known in the prior art.

The firewood processor (1) comprises at least a body and a cutting and splitting part including cutting (13) and splitting blades (14).

The feeding arrangement for a firewood processor comprises a feeding surface (2) arranged in connection with the firewood processor (1) for feeding a log (3) into the firewood processor in which the log is cut and the cut log sections are split. The feeding surface is connected to the firewood processor in a hinged manner, and the feeding surface is arranged inclined, such that a first end (4) of the feeding surface is lower than a second end (5) when the log is being fed. Alternatively, the feeding surface may be fastened to the body of the firewood processor, whereby the feeding surface moves with the firewood processor and inclination of the feeding surface is provided by inclination of the firewood processor or the body thereof.

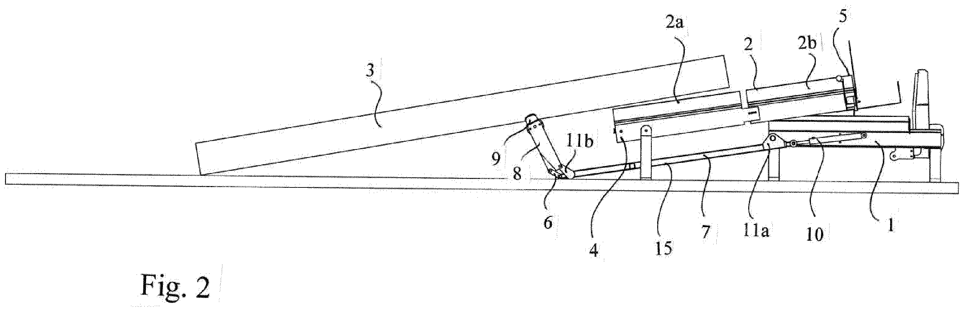

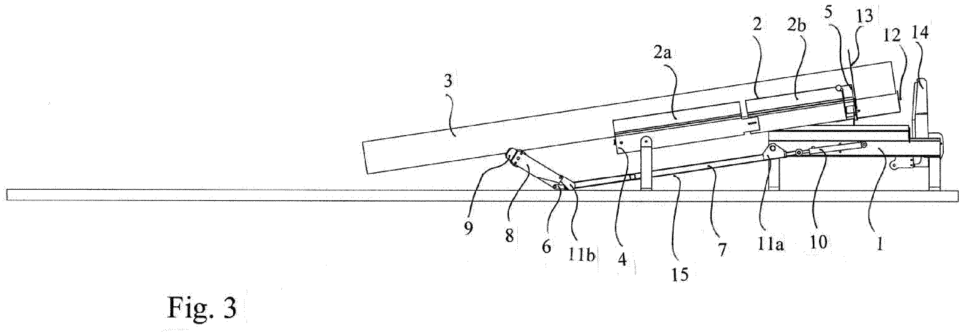

In addition, the feeding arrangement comprises a feeding member (15) comprising a shaft part (7) and a feeding part (8) connected to an end of the shaft part by means of a connecting part (11b). An open end of the feeding part is provided with a feeding roller (9). In this embodiment the feeding part (8) is in principle a support structure of the feeding roller (9). A transmission bar is arranged inside the shaft part (7), which transmission bar is connected by a first end thereof to an actuator (10) and by a second end thereof to the feeding part (8), preferably by means of an intermediate hinge (6) to the feeding part (8). The transmission bar together with the intermediate hinge (6) is able to transmit the movement of the actuator (10) to the feeding part (8). The feeding roller (9) may be moved by a feeding roller rotation actuator. The feeding part (8) and specifically an end thereof located towards the feeding roller (9), is height adjustable, i.e. liftable and lowerable, in different log (3) movement and transferring stages in a manner required by transferring. The log is moved forward by means of the feeding roller (9). Thereby the log (3) transfer is facilitated and the log may be transferred, such as lifted, to the feeding surface (2) via the first end (4) of the feeding surface. In this embodiment the shaft part (7) protects the transmission bar that is located therein. The feeding roller (9) is arranged to be concave and it is provided with a gripping surface by which to provide friction between the feeding roller and the log (3) being fed, and thereby the log is kept on the feeding roller. The feeding member (15) is connected by the shaft part (7) thereof to the firewood processor (1) by means of a connecting part (11a) that at the same time also supports the shaft part (7). The feeding member (15) is supported to the ground by means of the connecting part (11b) between the shaft part (7) and the feeding part (8). By means of the feeding member (15), the log (3) and specifically an end of the log can be lifted to the feeding surface (2) and moved along the feeding surface towards the second end (5) of the feeding surface. In an initial state (Fig. 1), i.e. when log (3) feeding is about to begin, the feeding part (8) of the feeding member (15) is lowered to a surface level. In a next stage (Fig. 2), i.e. when a log end is lifted to the feeding surface by means of the feeding roller (9), the feeding part (8) may be lifted by means of the actuator (10), the transmission bar and the intermediate hinge (6) to a suitable position. In a further stage (Fig. 3), i.e. as log feeding progresses, the feeding part (8) may be again lowered, if necessary, so that the log (3) can be provided to the feeding surface in a suitable position.

The feeding surface (2) may be provided with a belt or a chain between the first (4) and the second (5) end for moving the log towards the second end of the feeding surface.

A stop (12) is arranged in connection with the feeding surface (2), at the second end (5) thereof for stopping the log (3) in order for the log to be cut.

In this firewood processor (1) illustrated in the figures the cutting blade (13) for log cutting is arranged in connection with the second end (5) of the feeding surface (2). The cutting and splitting part of the firewood processor including the blades is arranged higher from ground level. The body of the firewood processor including the cutting and splitting part may be for example held in place on the ground on suitable legs, or the body comprises wheels or fastening members, such as fasteners for connecting the body to a trailer or to a wheel frame, or alternatively lugs or corresponding fasteners by means of which it may be locked for example to a tractor or a corresponding front end loader. Thereby the firewood processor may be transferred from place to place. The firewood processor also comprises a suitable power unit that may be an internal combustion engine, an electric motor, a power unit of another device, a tractor or another suitable power unit, to provide log cutting and splitting of the cut log section. The cutting blade is driven by means of the power unit supported to the body of the firewood processor.

In the embodiment of the figures, the feeding surface (2) is formed of two parts (2a,2b) connected to each other in a hinged manner. In addition, the point of connection between the feeding surface (2) and the firewood processor (1) is provided with a hinge structure. These hinge structures enable at least the first end (4) of the feeding surface to be moved in an up-down direction and the whole feeding surface to be arranged in a desired position. At the point of connection between the feeding surface and the firewood processor, both parts are shaped in a suitable manner so that the feeding surface is easily inclinable or pivotable relative to the firewood processor.

Movement of the feeding surface (2), e.g. in an up-down direction, is arranged to be implemented by means of an actuator, such as by means of a hydraulic cylinder. The actuator is mounted below the feeding surface, between the firewood processor and the feeding surface.

Movement of the feeding member (15), such as movement of the transmission bar arranged inside the shaft part (7), the intermediate hinge (6) and the feeding part (8) as well as the feeding roller (9), is arranged to be implemented by means of an actuator (10) that is in this embodiment a hydraulic cylinder. The actuator (10) is connected to an end of the transmission bar, at an end thereof located towards the firewood processor. The actuator pushes the transmission bar by means of which the movement is provided via the intermediate hinge (6) to the feeding part (8) and to the feeding roller (9).

In addition, the feeding arrangement comprises a control device for providing the movement, inclination and/or pivoting of the feeding surface (2) and the feeding member (15). The control device may be any device suitable for the purpose of use, by which the movement of the feeding surface and the feeding member to a desired position may be operated, preferably with assistance of actuators. The control device may comprise suitable control means for controlling the movements of both of the feeding surface and the feeding member. The control device and the control means thereof may be positioned in a suitable place in the firewood processor or in connection with the feeding surface.

In a transport position of the firewood processor according to Fig. 4, a first part (2a) of the feeding surface is lifted to a vertical position by means of the hinge structure between the parts (2a,2b) of the feeding surface. Also the feeding member (15) is arranged in a vertical position, such that the actuator (10) is arranged to push the transmission bar and thereby the intermediate hinge (6) to lift the feeding part (8). When the feeding part (8) is lifted to a highest position thereof and the path thereof is travelled to an extreme position, the feeding member (15) is liftable to a vertical position by means of a hinge point between the actuator and the transmission bar.

The invention has been described above by way of example without limiting the invention in any way merely to the structures presented herein. Different embodiments of the invention are possible within the scope defined by the claims.

## Claims

1. A feeding arrangement for a firewood processor, comprising a feeding surface (2) arranged in connection with the firewood processor (1) for feeding a log (3) into the firewood processor, the feeding surface (2) is connected to the firewood processor (1), and the feeding surface is arrangeable at least partly inclined, such that a first end (4) of the feeding surface is lower than a second end (5) in a log (3) feeding stage,
**characterized in that**
- the feeding arrangement comprises a feeding member (15), at least one part of which is height adjustable, for transferring the log to the feeding surface, and the feeding member is connected to the feeding surface and/or to the firewood processor, and
- the feeding member (15) comprises a shaft part (7) and a feeding part (8) connected to an end of the shaft part for providing movement of the log (3), and the feeding part (8) comprises at least one feeding roller (9) for moving the log forward.

2. The feeding arrangement according to claim 1, **characterized in that** the feeding surface (2) is liftable and lowerable by means of at least one actuator.

3. The feeding arrangement according to claim 1 or 2, **characterized in that** the feeding surface (2) is connected to the firewood processor (1) in a hinged manner and the point of connection between the firewood processor and the feeding surface is provided with at least one hinge structure.

4. The feeding arrangement according to any one of claims 1 - 3, **characterized in that** the feeding surface (2) is fastened to a body of the firewood processor.

5. The feeding arrangement according to any one of claims 1 - 4, **characterized in that** the feeding surface (2) is formed of at least two parts (2a,2b) connected to each other in a hinged manner.

6. The feeding arrangement according to any one of claims 1 - 5, **characterized in that** the feeding surface (2) is formed of at least two parts (2a,2b), which parts are arranged inclined, such that the first end (4) of the feeding surface is lower than the second end (5) in the log (3) feeding stage.

7. The feeding arrangement according to any one of claims 1 - 6, **characterized in that** the feeding surface (2) is arranged to be moved by means of movement of the firewood processor or the body of the firewood processor.

8. The feeding arrangement according to any one of claims 1 - 7, **characterized in that** the feeding arrangement comprises at least one control device for providing movement and/or pivoting of the feeding member (15) and/or the feeding surface (2).

9. The feeding arrangement according to any one of claims 1 - 8, **characterized in that** the feeding surface (2) is provided with a belt or a chain between the first end (4) and the second end (5) for moving the log (3) towards the second end of the feeding surface.

10. The feeding arrangement according to any one of claims 1 - 9, **characterized in that** the feeding roller (9) of the feeding part (8) comprises a gripping surface that provides friction between the log (3) and the feeding roller, by means of which gripping surface the log may be moved to the feeding surface (2).

11. The feeding arrangement according to any one of claims 1 - 10, **characterized in that** the feeding member (15) comprises guide members for guiding the log (3) or keeping it on the feeding part (8) of the feeding member.

12. The feeding arrangement according to any one of claims 1 - 11, **characterized in that** the movement of the feeding member (15) is arranged to be implemented by means of at least one actuator (10).

13. The feeding arrangement according to any one of claims 1 - 12, **characterized in that** a transmission bar is arranged inside the shaft part (7), which transmission bar is connected by a first end thereof to the actuator (10) and by a second end thereof to the feeding part (8).

## Patentansprüche

1. Eine Zuführeinrichtung für eine Feuerholzverarbeitungsanlage, umfassend eine Zuführoberfläche (2), welche in Verbindung mit der Feuerholzverarbeitungsanlage (1) eingerichtet ist, um einen Stamm (3) in die Feuerholzverarbeitungsanlage zuzuführen, wobei die Zuführoberfläche (2) mit der Feuerholzverarbeitungsanlage (1) verbunden ist, und wobei die Zuführoberfläche mindestens teilweise geneigt einrichtbar ist, so dass in einer Stamm(3)-Zuführphase ein erstes Ende (4) der Zuführoberfläche niedriger als ein zweites Ende (5) ist,
**dadurch gekennzeichnet, dass**
- die Zuführeinrichtung ein Zuführelement (15) umfasst, von welchem zumindest ein Teil höhenverstellbar ist, um den Stamm zur Zuführoberfläche zu übertragen, und wobei das Zuführelement mit der Zuführoberfläche und/oder mit der Feuerholzverarbeitungsanlage verbunden ist, und
- das Zuführelement (15) ein Schaftstück (7) und ein Zuführstück (8) umfasst, welches an ein Ende des Schaftstücks verbunden ist, um Bewegung des Stamms (3) bereitzustellen, und das Zuführstück (8) mindestens eine Zuführrolle (9) umfasst, um den Stamm vorwärtszubewegen.

2. Die Zuführeinrichtung nach Anspruch 1, **dadurch gekennzeichnet, dass** die Zuführoberfläche (2) mittels mindestens eines Aktuators anhebbar und absenkbar ist.

3. Die Zuführeinrichtung nach Anspruch 1 oder 2, **dadurch gekennzeichnet, dass** die Zuführoberfläche (2) klappbar mit der Feuerholzverarbeitungsanlage (1) verbunden ist und die Verbindungsstelle zwischen der Feuerholzverarbeitungsanlage und der Zuführoberfläche mit mindestens einer Gelenkstruktur versehen ist.

4. Die Zuführeinrichtung nach einem der Ansprüche 1-3, **dadurch gekennzeichnet, dass** die Zuführoberfläche (2) an einen Körper der Feuerholzverarbeitungsanlage befestigt ist.

5. Die Zuführeinrichtung nach einem der Ansprüche 1-4, **dadurch gekennzeichnet, dass** die Zuführoberfläche (2) aus mindestens zwei Teilen (2a, 2b) gebildet wird, welche klappbar miteinander verbunden sind.

6. Die Zuführeinrichtung nach einem der Ansprüche 1-5, **dadurch gekennzeichnet, dass** die Zuführoberfläche (2) aus mindestens zwei Teilen (2a, 2b) gebildet wird, wobei die Teile geneigt angeordnet sind, so dass in der Stamm(3)-Zuführphase das erste Ende (4) der Zuführoberfläche niedriger ist als das zweite Ende (5).

7. Die Zuführeinrichtung nach einem der Ansprüche 1-6, **dadurch gekennzeichnet, dass** die Zuführoberfläche (2) angeordnet ist, um durch ein Bewegungsmittel der Feuerholzverarbeitungsanlage oder des Körpers der Feuerholzverarbeitungsanlage bewegt zu werden.

8. Die Zuführeinrichtung nach einem der Ansprüche 1-7, **dadurch gekennzeichnet, dass** die Zuführeinrichtung mindestens eine Kontrollvorrichtung umfasst, um Bewegung und/oder Schwenkung des Zuführelements (15) und/oder der Zuführoberfläche (2) bereitzustellen.

9. Die Zuführeinrichtung nach einem der Ansprüche 1-8, **dadurch gekennzeichnet, dass** die Zuführoberfläche (2) mit einem Gurt oder einer Kette zwischen dem ersten Ende (4) und dem zweiten Ende (5) versehen ist, um den Stamm (3) in Richtung des zweiten Endes der Zuführoberfläche zu bewegen.

10. Die Zuführeinrichtung nach einem der Ansprüche 1-9, **dadurch gekennzeichnet, dass** die Zuführrolle (9) des Zuführstücks (8) eine greifende Oberfläche umfasst, welche Reibung zwischen dem Stamm (3) und der Zuführrolle bereitstellt, wobei mittels der greifenden Oberfläche der Stamm zur Zuführoberfläche (2) bewegt werden kann.

11. Die Zuführeinrichtung nach einem der Ansprüche 1-10, **dadurch gekennzeichnet, dass** das Zuführelement (15) Führungselemente umfasst um den Stamm (3) zu führen, oder um ihn auf dem Zuführstück (8) des Zuführelements zur behalten.

12. Die Zuführeinrichtung nach einem der Ansprüche 1-11, **dadurch gekennzeichnet, dass** die Bewegung des Zuführelements (15) angeordnet ist, um mittels mindestens eines Aktuators (10) umgesetzt zu werden.

13. Die Zuführeinrichtung nach einem der Ansprüche 1-12, **dadurch gekennzeichnet, dass** eine Übertragungsstange innerhalb des Schaftstücks (7) angeordnet ist, wobei die Übertragungsstange durch ein erstes Ende derselben mit dem Aktuator (10) und durch ein zweites Ende derselben mit dem Zuführstück (8) verbunden ist.

## Revendications

1. Dispositif d'alimentation pour un appareil de fendage de bois de chauffage, comprenant une surface d'alimentation (2) disposée en liaison avec l'appareil de fendage de bois de chauffage (1) pour alimenter en grumes (3) l'appareil de fendage de bois de chauffage, la surface d'alimentation (2) est reliée à l'appareil de fendage de bois de chauffage (1), et la surface d'alimentation peut être disposée au moins partiellement inclinée, de sorte qu'une première extrémité (4) de la surface d'alimentation est plus basse qu'une seconde extrémité (5) dans une étape d'alimentation en grumes (3),
**caractérisé en ce que**
- le dispositif d'alimentation comprend un élément d'alimentation (15), dont au moins une partie est réglable en hauteur, pour transférer la grume vers la surface d'alimentation, et l'élément d'alimentation est relié à la surface d'alimentation et/ou à l'appareil de fendage de bois de chauffage, et
- l'élément d'alimentation (15) comprend une partie d'arbre (7) et une partie d'alimentation (8) reliée à une extrémité de la partie d'arbre pour assurer le mouvement de la grume (3), et la partie d'alimentation (8) comprend au moins un rouleau d'alimentation (9) pour faire avancer la grume.

2. Dispositif d'alimentation selon la revendication 1, **caractérisé en ce que** la surface d'alimentation (2) peut être levée et abaissée au moyen d'au moins un actionneur.

3. Dispositif d'alimentation selon la revendication 1 ou 2, **caractérisé en ce que** la surface d'alimentation (2) est reliée à l'appareil de fendage de bois de chauffage (1) de manière articulée et le point de liaison entre l'appareil de fendage de bois de chauffage et la surface d'alimentation est pourvu d'au moins une structure articulée.

4. Dispositif d'alimentation selon l'une quelconque des revendications 1 à 3, **caractérisé en ce que** la surface d'alimentation (2) est fixée à un corps de l'appareil de fendage de bois de chauffage.

5. Dispositif d'alimentation selon l'une quelconque des revendications 1 à 4, **caractérisé en ce que** la surface d'alimentation (2) est formée d'au moins deux parties (2a, 2b) reliées entre elles de manière articulée.

6. Dispositif d'alimentation selon l'une quelconque des revendications 1 à 5, **caractérisé en ce que** la surface d'alimentation (2) est formée d'au moins deux parties (2a, 2b), lesquelles parties sont disposées de manière inclinée, de sorte que la première extrémité (4) de la surface d'alimentation est plus basse que la seconde extrémité (5) dans l'étape d'alimentation en grumes (3).

7. Dispositif d'alimentation selon l'une quelconque des revendications 1 à 6, **caractérisé en ce que** la surface d'alimentation (2) est agencée pour être déplacée par le mouvement de l'appareil de fendage de bois de chauffage ou du corps de l'appareil de fendage de bois de chauffage.

8. Dispositif d'alimentation selon l'une quelconque des revendications 1 à 7, **caractérisé en ce que** le dispositif d'alimentation comprend au moins un dispositif de commande pour assurer le déplacement et/ou le pivotement de l'élément d'alimentation (15) et/ou de la surface d'alimentation (2).

9. Dispositif d'alimentation selon l'une quelconque des revendications 1 à 8, **caractérisé en ce que** la surface d'alimentation (2) est munie d'une courroie ou d'une chaîne entre la première extrémité (4) et la seconde extrémité (5) pour déplacer la grume (3) vers la seconde extrémité de la surface d'alimentation.

10. Dispositif d'alimentation selon l'une quelconque des revendications 1 à 9, **caractérisé en ce que** le rouleau d'alimentation (9) de la partie d'alimentation (8) comprend une surface de préhension qui assure un frottement entre la grume (3) et le rouleau d'alimentation, surface de préhension au moyen de laquelle la grume peut être déplacée vers la surface d'alimentation (2).

11. Dispositif d'alimentation selon l'une quelconque des revendications 1 à 10, **caractérisé en ce que** l'élément d'alimentation (15) comprend des éléments de guidage pour guider la grume (3) ou la maintenir sur la partie d'alimentation (8) de l'élément d'alimentation.

12. Dispositif d'alimentation selon l'une quelconque des revendications 1 à 11, **caractérisé en ce que** le mouvement de l'élément d'alimentation (15) est agencé pour être mis en œuvre au moyen d'au moins un actionneur (10).

13. Dispositif d'alimentation selon l'une quelconque des revendications 1 à 12, **caractérisé en ce qu'**une barre de transmission est agencée à l'intérieur de la partie arbre (7), laquelle barre de transmission est reliée par une première extrémité de celle-ci à l'actionneur (10) et par une seconde extrémité de celle-ci à la partie alimentation (8).
